# EUROPEAN PATENT APPLICATION

(11) **EP 1 471 546 A2**
(43) Date of publication of application: **27.10.2004**
(21) Application number: 04009443.5
(22) Date of filing: 21.04.2004
(51) Int. Cl.: H01G 9/20

(54) **Method of injecting an electrolytic solution to fill a photoelectrochemical cell**

(30) Priority: 23.04.2003 JP 2003118472
(71) Applicant: SONY CORPORATION, Tokyo (JP)
(72) Inventor: Ogura, Reiko, Shinagawa-ku Tokyo (JP)
(74) Representative: Müller - Hoffmann & Partner

(57) **Abstract**

A wet-type photoelectric conversion device is provided with an electrolytic solution containing portion of which a portion is opened. An electrolytic solution is dropped to the opened portion of the electrolytic solution containing portion, and the wet-type photoelectric conversion device is rotated to generate a centrifugal force, whereby the electrolytic solution is injected into the inside of the electrolytic solution containing portion under the action of the centrifugal force. The minimum width of the inside of the electrolytic solution containing portion is, for example, in the range of 20 to 120 µm.

## Description

### BACKGROUND OF THE INVENTION

The present invention relates to a method of injecting an electrolytic solution, a method of manufacturing a wet-type photoelectric conversion device, and a method of manufacturing a wet-type apparatus, which are favorable when applied, for example, to the manufacture of a wet-type solar cell using a semiconductor layer comprised of semiconductor particulates, particularly a semiconductor layer comprised of semiconductor particulates sensitized by a dye.

Solar cells are photoelectric conversion devices for converting sunlight into electrical energy, and use the sunlight as an energy source. Therefore, the solar cells have very little influence on the global environments, and are expected to spread more widely.

A variety of materials for constituting solar cells have been investigated, and many solar cells using silicon are commercially available. The solar cells using silicon are generally classified into crystalline silicon-based solar cells using single-crystalline or polycrystalline silicon, and amorphous silicon-based solar cells. Conventionally, single-crystalline or polycrystalline silicon, i.e., crystalline silicon has been used for solar cells in many cases.

The crystalline silicon-based solar cells are higher than the amorphous silicon-based solar cells in photoelectric conversion efficiency, which indicates the performance of converting light (solar) energy into electrical energy. However, the crystalline silicon-based solar cells require much energy and time for crystal growth, and, therefore, they are low in productivity and disadvantageous on a cost basis.

The amorphous silicon-based solar cells are characterized in that they have higher light absorption performance, permit a wider range of selection of substrate, and can be enlarged in area more easily, as compared with the crystalline silicon-based solar cells. However, the amorphous silicon-based solar cells are inferior to the crystalline silicon-based solar cells in photoelectric conversion efficiency. Furthermore, though the amorphous silicon-based solar cells are higher than the crystalline silicon-based solar cells in productivity, they need a vacuum process in the manufacture thereof, like the crystalline silicon-based solar cells, so that they still exert a heavy burden on an equipment basis.

On the other hand, in order to solve the above problems and to achieve a further reduction in the cost of solar cells, researches on solar cells using an organic material in place of the silicon-based material have been made for a long time. However, most of these solar cells show photoelectric conversion efficiencies as low as about 1%, and they have not been successfully put to practical use.

Among these solar cells, the dye-sensitized solar cells proposed by Gratzel et al in 1991 are inexpensive, show high photoelectric conversion efficiencies, and, unlike the conventional silicon-based solar cells, do not need large-scale equipment for the production thereof. Because of such advantages, the dye-sensitized solar cells have been attracting attention (see, for example, Nature, 353, p.737 (1991)).

The dye-sensitized solar cells have a general structure in which a semiconductor porous electrode comprising a semiconductor porous film of titanium oxide or the like formed on a transparent conductive substrate, combined with a sensitizing dye, and a counter electrode obtained by forming a platinum layer or the like on a substrate are combined with each other, and an organic electrolytic solution containing oxidation-reduction species such as iodine and iodide ions is charged into the space between the electrodes.

Conventionally, as a method for injecting the electrolytic solution into an electrolytic solution containing portion of the dye-sensitized solar cell, there has been known a method in which two holes are opened in one of the substrates constituting the dye-sensitized solar cell, the electrolytic solution is dropped to one of the holes, and a negative pressure (suction) is applied to the other hole, thereby causing impregnation with the electrolytic solution. It is necessary to apply the negative pressure (suction) to the other hole, since simple dropping of the electrolytic solution to the one hole cannot cause the electrolytic solution to be distributed throughout the electrolytic solution containing portion.

However, the conventional method of injecting the electrolytic solution has the following problems. Since two holes are opened in the dye-sensitized solar cell, it is necessary to perform a sealing operation at two locations, for closing the holes after the injection. Besides, since the equipment for applying the negative pressure (suction) to the other hole is for exclusive use, this method requires additional equipment cost and installation time.

### SUMMARY OF THE INVENTION

The present invention has been made in order to solve the above-mentioned problems. Accordingly, it is an object of the present invention to provide a method of injecting an electrolytic solution, a method of manufacturing a wet-type photoelectric conversion device, and a method of manufacturing a variety of wet-type apparatuses using an electrolytic solution, which make it possible to inject an electrolytic solution inexpensively and speedily.

For attaining the above object, in accordance with a first aspect of the present invention, there is provided a method of injecting an electrolytic solution, for injecting the electrolytic solution into an electrolytic solution containing vessel of which a portion is opened. The injection of the electrolytic solution into the electrolytic solution containing vessel is conducted by utilizing a centrifugal force.

In the case of injecting the electrolytic solution, specifically, the electrolytic solution is dropped to the opened portion of the electrolytic solution containing vessel, and the centrifugal force is applied in such a manner that at least a force in the direction from the opened portion toward the inside of the electrolytic solution containing vessel is exerted on the electrolytic solution. The method for applying the centrifugal force is not particularly limited. From the viewpoint of enhanced productivity, however, a method may be used in which, for example, the electrolytic solution is dropped to the opened portion of each electrolytic solution containing vessel, a single or a plurality of such electrolytic solution containing vessels are fixed on a turntable rotatable about a predetermined center so that the opened portion of each electrolytic solution containing vessel is directed inwards (toward the center), and the turntable is rotated about the center, whereby the electrolytic solution is injected into the electrolytic solution containing vessel or vessels. Another method may also be used in which the electrolytic solution containing vessel or vessels are fixed on the turntable before the dropping of the electrolytic solution, thereafter the electrolytic solution is dropped to the opened portion of each electrolytic solution containing vessel, and the turntable is rotated, whereby the electrolytic solution is injected into the electrolytic solution containing vessel or vessels.

The internal size in one direction of a section of the electrolytic solution containing vessel is generally in the range of 1 to 200 µm, typically 10 to 200 µm, and more typically 20 to 150 µm. Typically, the internal shape of the electrolytic solution containing vessel is a rectangular parallelopiped such that the length of a side in one direction (for example, a length of 1 to 200 µm, as above-mentioned) is extremely smaller than the lengths of the other sides, and a sectional shape of the electrolytic solution containing vessel is a flat rectangle. Besides, the viscosity of the electrolytic solution differs depending on the kind of the electrolytic solution used, and is generally not more than 20 cp, typically not more than 10 cp.

An electrolyte in the electrolytic solution is comprised of an oxidation-reduction pair and a solvent. Specific examples of the oxidation-reduction pair include combinations of iodine (I₂) with an iodine compound (a metal iodide, an organic iodide, or the like); combinations of bromine (Br₂) with a bromine compound (a metal bromide, an organic bromide, or the like); metal complexes such as ferrocianate/ferricyanate, ferrocene/ferricinium ion, etc.; sulfur compounds such as sodium polysulfides, alkyl thiol/alkyl disulfide, etc.; viologen dyes; and hydroquinone/quinone. Preferred examples of the cations in the above-mentioned metal compounds include Li, Na, K, Mg, Ca, and Cs, whereas preferred examples of the cations in the above-mentioned organic compounds include quaternary ammonium compounds such as tetraalkylammonium compounds, pyridinium compounds, imidazolium compounds, etc.; these examples are non-limitative examples, and a mixture of two or more of these may also be used, as required. Among others, preferred are those electrolytes which are obtained by combining I₂ with LiI, NaI, or a quaternary ammonium compound such as imidazolium iodide. The concentration of the electrolyte salt, based on the solvent, is preferably in the range of 0.05 to 5 M, more preferably 0.2 to 1 M. The concentration of I₂ or Br₂ is preferably in the range of 0.00005 to 1 M, more preferably 0.0001 to 0.1 M. Various additives such as 4-tert-butylpyridine, 2-n-propylpyridine, carboxylic acids, etc. may also be added, for the purpose of improving open circuit voltage or short-circuit current.

Examples of the solvent in the electrolytic solution include water, alcohols, ethers, esters, carbonic acid esters, lactones, carboxylic acid esters, phosphoric acid trimesters, heterocyclic compounds, nitriles, ketones, amides, nitromethane, halogenated hydrocarbons, dimethyl sulfoxide, sulfolan, N-methylpyrrolidone, 1,3-dimethylimidazolidinone, 3-methyloxazolidinone, and hydrocarbons; these are non-limitative examples, and these can be used either singly or in combination of two or more thereof. Besides, room-temperature ionic liquids comprising a tetraalkyl-based, pyridinium-based or imidazolim-based quaternary ammonium salt can also be used as the solvent of the electrolytic solution.

Some examples of the viscosity of the electrolytic solution generally used in a dye-sensitized wet-type solar cell are as follows: in the cases where methanol, acetonitrile, and propylene carbonate are respectively used as the solvent, the viscosity values are about 0.55 cp, about 0.38 cp, and about 2.3 cp, respectively. It should be noted here that, in many cases, the electrolytic solution is admixed with a normal-temperature fused salt (for example, DMPII (1-propyl-2,3-dimethylimidazolium iodide) or the like) in order to lower the viscosity and thereby to smoothen the diffusion of ions, for the purpose of enhancing the photoelectric conversion efficiency of the dye-sensitized wet-type solar cell. Accordingly, the viscosity of the electrolytic solution is lower than the above-mentioned exemplary values, in many cases.

In accordance with a second aspect of the present invention, there is provided a method of manufacturing a wet-type photoelectric conversion device, including the step of injecting centrifugally an electrolytic solution into a vessel having at least one opening.

In the wet-type photoelectric conversion device, generally, a semiconductor layer comprised of semiconductor particulates is formed on a transparent conductive substrate, a counter electrode comprised of platinum or the like is formed on another substrate, these substrates are so held that the semiconductor layer and the counter electrode are opposed to each other with a predetermined spacing therebetween, and the peripheral portions of the substrates exclusive of an opening portion for injection of the electrolytic solution are sealed with a sealing material. The space thus formed between the substrates becomes the electrolytic solution containing portion. As the semiconductor particulates, for example, particulates of titanium oxide having the anatase-type crystal structure may be used. The sealing material is not particularly limited, but it is preferable to use a material which has light resistance, an insulating property, and a moisture-proof property. Examples of the sealing material include epoxy resin, UV-curable resins, acrylic adhesives, EVA (ethylene vinyl acetate), ionomer resins, ceramics, and fusion-bonding films.

In the wet-type photoelectric conversion device, the above descriptions relating to the first aspect of the present invention are again established, where the electrolytic solution containing portion is regarded as corresponding to the electrolytic solution containing vessel.

In accordance with a third aspect of the present invention, there is provided a method of injecting an electrolytic solution, for injecting the electrolytic solution into a space between a semiconductor electrode comprising a semiconductor with a dye and a counter electrode opposed to the semiconductor electrode. The method includes the steps of injecting the electrolytic solution into at least a part of the space between the semiconductor electrode and the counter electrode, and applying a centrifugal force to the semiconductor electrode and the counter electrode.

In accordance with a fourth aspect of the present invention, there is provided a method of injecting an electrolytic solution, for injecting the electrolytic solution into a space between a semiconductor electrode comprising a semiconductor with a dye supported thereon and a counter electrode opposed to the semiconductor electrode. The method includes the steps of injecting the electrolytic solution into at least a part of the space between the semiconductor electrode and the counter electrode, and rotating the semiconductor electrode and the counter electrode.

In accordance with a fifth aspect of the present invention, there is provided a method of manufacturing a wet-type apparatus, including the step of injecting centrifugally an electrolytic solution into a vessel having at least one opening.

Here, the wet-type apparatus includes the above-mentioned wet-type photoelectric conversion device, and also includes a variety of wet-type apparatuses which are each used with an electrolytic solution injected into an electrolytic solution containing portion.

The above descriptions relating to the first and second aspects of the present invention are established similarly in relation to the third, fourth, and fifth aspects of the present invention, unless contrary to the nature of the descriptions.

Thus, according to the present invention, an electrolytic solution is injected into an electrolytic solution containing vessel or an electrolytic solution containing portion by utilizing a centrifugal force, whereby the injection of the electrolytic solution can be conducted inexpensively and speedily.

### BRIEF DESCRIPTION OF THE DRAWINGS

The above and other objects, features and advantages of the present invention will become apparent from the following description and appended claims, taken in conjunction with the accompanying drawings, in which:
Fig. 1 is a perspective view for illustrating a method of manufacturing a dye-sensitized wet-type solar cell according to one embodiment of the present invention;
Fig. 2 is a sectional view, taken along line II-II of Fig. 1, of the dye-sensitized wet-type solar cell shown in Fig. 1;
Fig. 3 is a sectional view for illustrating the method of manufacturing the dye-sensitized wet-type solar cell according to one embodiment of the present invention;
Fig. 4 is a plan view for illustrating the method of manufacturing the dye-sensitized wet-type solar cell according to one embodiment of the present invention;
Fig. 5 is a sectional view for illustrating the method of manufacturing the dye-sensitized wet-type solar cell according to one embodiment of the present invention;
Fig. 6 is a sectional view for illustrating the method of manufacturing the dye-sensitized wet-type solar cell according to one embodiment of the present invention;
Fig. 7 is a schematic diagram for illustrating another embodiment of the method of injecting an electrolytic solution according to the present invention;
Fig. 8 is a schematic diagram for illustrating a further embodiment of the method of injecting an electrolytic solution according to the present invention; and
Fig. 9 is a schematic diagram for illustrating yet another embodiment of the method of injecting an electrolytic solution according to the present invention.

### DESCRIPTION OF THE PREFERRED EMBODIMENT

Now, one embodiment of the present invention will be described below, referring to the drawings.

In this embodiment, the case of applying the present invention to the manufacture of a dye-sensitized wet-type solar cell will be described.

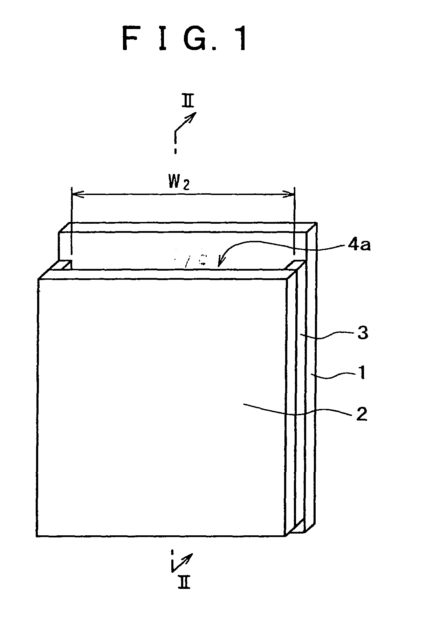

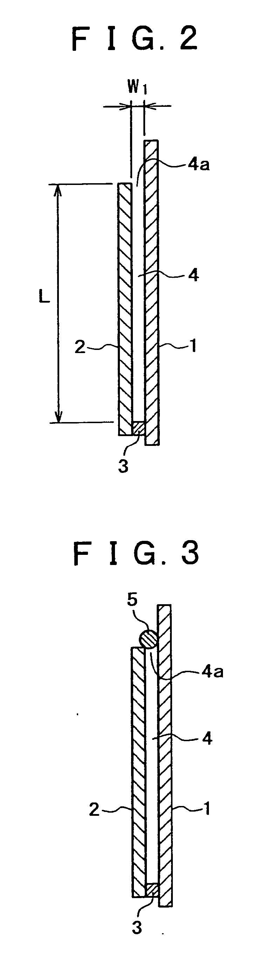

Fig. 1 is a perspective view showing the condition of the dye-sensitized wet-type solar cell in the course of manufacture thereof, and Fig. 2 is a sectional view taken along line II-II of Fig. 1.

As shown in Figs. 1 and 2, in this embodiment, a transparent conductive substrate 1 provided thereon with a semiconductor layer (not shown) comprised of semiconductor particles with a dye and a transparent substrate 2 provided thereon with a platinum layer (not shown) as a counter electrode are so held that the semiconductor layer and the platinum layer are opposed to each other with a predetermined spacing therebetween, and the peripheral portions of the two substrates exclusive of one side are sealed with a sealing material 3. As a result, a pocket-like electrolytic solution containing portion 4 in the shape of a flat rectangular parallelopiped with one end portion 4a opened is formed between the transparent conductive substrate 1 provided thereon with the semiconductor layer comprised of the semiconductor particulates and the transparent substrate 2 provided thereon with the platinum layer. Hereinafter, the whole assembly of the transparent conductive substrate 1 and the transparent substrate 2 after sealed will be referred to as the dye-sensitized wet-type solar cell.

Of the electrolytic solution containing portion 4, the width W₁ is, for example, 20 to 150 µm, the width W₂ is, for example, about 1 cm, and the length L is, for example, about 1 cm. The transparent conductive substrate 1 and the transparent substrate 2 are each obtained, for example, by forming a layer of indium-tin compound oxide (ITO) as a transparent electrode on a film of polyethylene terephthalate (PET). As the semiconductor particulates constituting the semiconductor layer, for example, particulates of titanium oxide having the anatase-type crystal structure are used. As the sealing material 3, for example, a combination of an EVA film and an epoxy adhesive is used.

Next, as shown in Fig. 3, an electrolytic solution 5 is dropped to the opened one end portion 4a of the electrolytic solution containing portion 4 of the dye-sensitized wet-type solar cell. The amount of the electrolytic solution 5 thus dropped is the amount to be injected into the electrolytic solution containing portion 4. As the electrolytic solution 5, for example, a solution of LiI (0.5 M), I₂ (0.05 M) and tert-butylpyridine (0.5 M) in propylene carbonate/ethylene carbonate (1/1) is used.

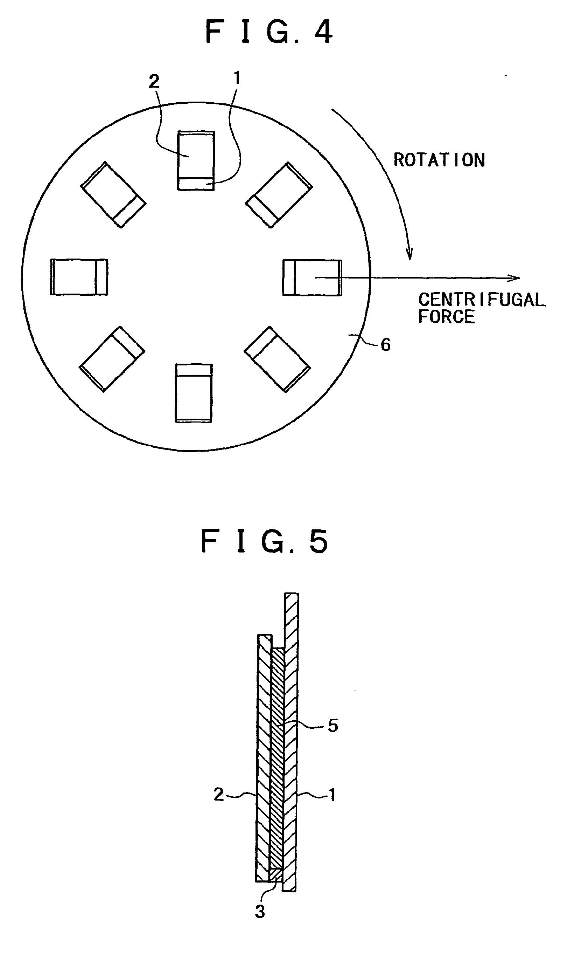

Subsequently, as shown in Fig. 4, a plurality of the dye-sensitized wet-type solar cells, each carrying the electrolytic solution 5 dropped on the one end portion 4a of each electrolytic solution containing portion 4, are placed and fixed on a turntable 6. In this case, each of the dye-sensitized wet-type solar cells is so disposed that, for example, the transparent conductive substrate 1 is on the lower side, and the one end portion 4a of the electrolytic solution containing portion 4 is directed toward the center of rotation of the turntable 6. Here, the distance between the center of rotation of the turntable 6 and the one end portion 4a of the electrolytic solution containing portion 4 (namely, the radius of rotation) is set to be about 3 cm, for example.

Next, the turntable 6 is rotated at a predetermined rotating speed, for example, 500 rpm. Under the rotation, a centrifugal force is exerted on the electrolytic solution 5 dropped to the one end portion 4a of the electrolytic solution containing portion 4 of each dye-sensitized wet-type solar cell fixed on the turntable 6, and, under the action of the centrifugal force, the electrolytic solution 5 flows toward the depth of the electrolytic solution containing portion 4, to be distributed throughout the electrolytic solution containing portion 4. In this manner, the injection of the electrolytic solution 5 into the electrolytic solution containing portion 4 of each dye-sensitized wet-type solar cell is completed, as shown in Fig. 5.

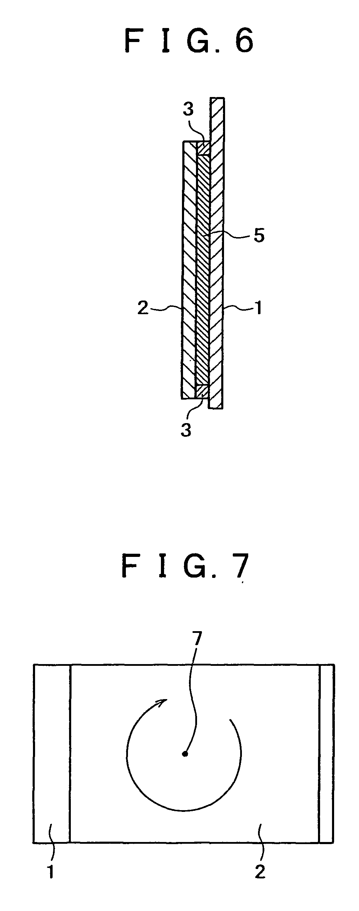

Thereafter, as shown in Fig. 6, the one end portion 4a of the electrolytic solution containing portion 4 of each dye-sensitized wet-type solar cell is also sealed with the sealing material 3. In this manner, the desired dye-sensitized wet-type solar cell is manufactured.

As has been described above, according to this embodiment, the electrolytic solution 5 is dropped to the opened one end portion 4a of the electrolytic solution containing portion 4, and a centrifugal force directed toward the inside of the electrolytic solution containing portion 4 is exerted on the dropped electrolytic solution 5, whereby the electrolytic solution 5 can be easily injected into the inside of the electrolytic solution containing portion 4. The time required for the injection of the electrolytic solution 5 is extremely short, for example, about 1 to 2 min, as contrasted to the conventional time of no less than about 2 hr. Besides, in this case, it suffices to leave only the one end portion 4a of the electrolytic solution containing portion 4 open, and to close only the one end portion 4a after the injection of the electrolytic solution. This not only saves labor but also eliminates the need for an equipment for applying a negative pressure (suction), which has been needed in the conventional method. Therefore, the electrolytic solution 5 can be injected extremely inexpensively, making it possible to manufacture a dye-sensitized wet-type solar cell at low cost.

While one embodiment of the present invention has been described in detail above, the present invention is not limited to the above-described embodiment, and various modifications are possible based on the technical thought of the present invention.

For example, the numerical values, structures, shapes, materials, processes and the like mentioned in the above-described embodiment are to be construed as mere examples, and, therefore, numerical values, structures, shapes, materials, processes and the like different from the above can also be adopted, as required.

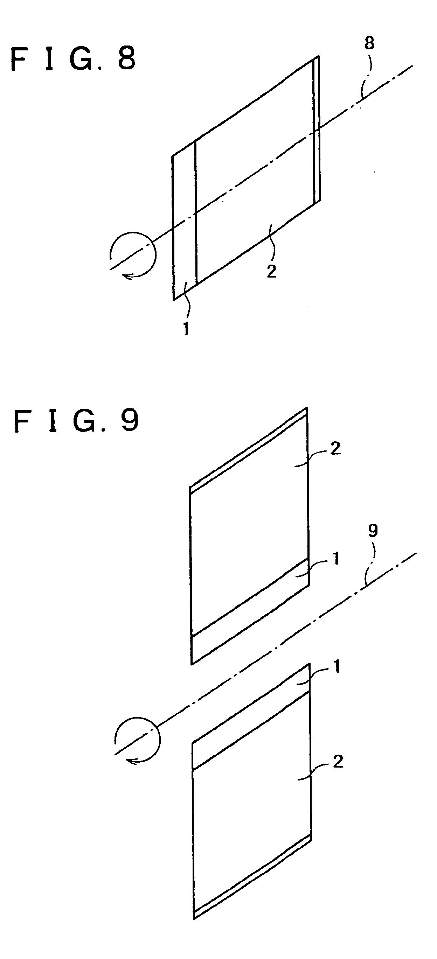

Besides, as the method for injecting the electrolytic solution into the electrolytic solution containing portion 4, for example, the methods as illustrated in Figs. 7, 8, and 9 may also be used. In the example shown in Fig. 7, the dye-sensitized wet-type solar cell is rotated about an axis 7 orthogonal to the principal surface thereof. In the example shown in Fig. 8, the dye-sensitized wet-type solar cell is rotated about an axis 8 which equally bisects the dye-sensitized wet-type solar cell. In the example shown in Fig. 9, a single or a plurality of dye-sensitized wet-type solar cells are rotated about an axis 9 which is located outside the dye-sensitized wet-type solar cell(s), is parallel to the one end portion 4a of the electrolytic solution containing portion 4 of each dye-sensitized wet-type solar cell, and is on the same plane as the one end portion 4a.

## Claims

1. A method of injecting an electrolytic solution, for injecting said electrolytic solution into an electrolytic solution containing vessel of which a portion is opened, wherein
said injection of said electrolytic solution into said electrolytic solution containing vessel is conducted by utilizing a centrifugal force.

2. A method of injecting an electrolytic solution as set forth in claim 1, which comprises the steps of:
dropping said electrolytic solution to said opened portion of said electrolytic solution containing vessel; and
applying said centrifugal force in such a manner that at least a force in the direction from said opened portion toward the inside of said electrolytic solution containing vessel is exerted on said electrolytic solution.

3. A method of injecting an electrolytic solution as set forth in claim 1, which comprises the steps of:
dropping said electrolytic solution to said opened portion of said electrolytic solution containing vessel;
fixing said electrolytic solution containing vessel on a turntable rotatable about a predetermined center so that said opened portion is directed inwards; and
rotating said turntable about said center, to thereby inject said electrolytic solution into said electrolytic solution containing vessel.

4. A method of injecting an electrolytic solution as set forth in claim 1, wherein the internal size in one direction of a section of said electrolytic solution containing vessel is in the range of 1 to 200 µm.

5. A method of injecting an electrolytic solution as set forth in claim 1, wherein the internal size in one direction of a section of said electrolytic solution containing vessel is in the range of 10 to 200 µm.

6. A method of injecting an electrolytic solution as set forth in claim 1, wherein the internal size in one direction of a section of said electrolytic solution containing vessel is in the range of 20 to 150 µm.

7. A method of injecting an electrolytic solution as set forth in claim 1, wherein said electrolytic solution has a viscosity of not more than 20 cp.

8. A method of injecting an electrolytic solution as set forth in claim 1, wherein said electrolytic solution has a viscosity of not more than 10 cp.

9. A method of injecting an electrolytic solution as set forth in claim 1, wherein said section of said electrolytic solution containing vessel is rectangular in shape.

10. A method of manufacturing a wet-type photoelectric conversion device, comprising the step of injecting centrifugally an electrolytic solution into a vessel having at least one opening.

11. A method of injecting an electrolytic solution, for injecting said electrolytic solution into a space between a semiconductor electrode comprising a semiconductor with a dye and a counter electrode opposed to said semiconductor electrode, said method comprising the steps of:
injecting said electrolytic solution into at least a part of said space between said semiconductor electrode and said counter electrode, and
applying a centrifugal force to said semiconductor electrode and said counter electrode.

12. A method of injecting an electrolytic solution, for injecting said electrolytic solution into a space between a semiconductor electrode comprising a semiconductor with a dye and a counter electrode opposed to said semiconductor electrode, said method comprising the steps of:
injecting said electrolytic solution into at least a part of said space between said semiconductor electrode and said counter electrode, and
rotating said semiconductor electrode and said counter electrode.

13. A method of manufacturing a wet-type apparatus, comprising the step of injecting centrifugally an electrolytic solution into a vessel having at least one opening.
